# EUROPÄISCHE PATENTSCHRIFT

(11) **EP 1 394 080 B1**
(45) Veröffentlichungstag und Bekanntmachung des Hinweises auf die Patenterteilung: **24.05.2006**
(21) Anmeldenummer: 03016693.8
(22) Anmeldetag: 04.08.2003
(51) Int. Cl.: B65G 23/06, B65G 17/40

(54) **Transportzahnkette mit verringertem Höhenverschleiss**
Tooth conveyor chain with reduced height wear
Chaîne transporteuse à dents ayant une usure en hauteur réduite

(30) Priorität: 09.08.2002 DE 10236705
(43) Veröffentlichungstag der Anmeldung: 03.03.2004
(73) Patentinhaber: Rexroth Mecman GmbH, 30453 Hannover (DE)
(72) Erfinder: Meyer, Thorsten, Dipl. Ing., 30880 Laatzen (DE)
(74) Vertreter: Maiwald Patentanwalts GmbH

(56) Entgegenhaltungen:
- WO-A-01/92758
- AU-B- 495 420
- GB-A- 2 108 456
- US-A- 2 653 485

## Beschreibung

Die Erfindung betrifft eine Zahnlasche einer Transportzahnkette mit Ausbrüchen und zwei endseitigen Eingriffszähnen zum formschlüssigen Eingreifen in ein Zahnrad, mit an die Verzahnung des Zahnrads angepasster Außenkontur, welche außerdem je eine unteres Aufstandsfläche zum Gleiten auf einer Gleitfläche eines Führungskörpers aufweist. Ferner betrifft die Erfindung eine Transportzahnkette mit einer Vielzahl dieser Zahnlaschen sowie Transportförderer mit mindestens einer Vielzahl dieser Transportzahnketten.

Derartige Zahnlaschen, Transportzahnketten und Transportförderer kommen üblicherweise in fördertechnischen Anwendungen zum Einsatz. So werden zur Bildung einer linearen Förderstrecke mit einem Transportförderer nach Art eines Förderbandes Transportzahnketten mit Zahnlaschen über eine langgestreckte Trägereinrichtung mit endseitigen Umlenk- und/oder Antriebsrollen endlos geführt. Dabei greift zumindest die als Zahnrad ausgebildete Antriebsrolle in eine korrespondierende Verzahnung der Zahnlasche beziehungsweise der Zahnkette ein. Eine derartige Anordnung wird gewöhnlich in Umgebungen mit hohen Temperaturen - wie beispielsweise bei der Hohlglasherstellung - eingesetzt. Die sämtlich aus Stahl hergestellten Bestandteile der Zahnkette halten den hierbei auftretenden enormen Temperaturen zuverlässig stand.

Es sind Kettenförderer im Stand der Technik bekannt (sh. GB 2 108 456), bei denen die Zahnkette innerhalb eines in der langgestreckten Trägereinrichtung ausgebildeten Führungskörpers nach Art eines Gleitbetts geführt wird. Der Führungskörper besteht gewöhnlich aus einem flachen Bodenbereich mit zwei seitlich angrenzenden senkrechten Flankenbereichen. Die Breite des Führungskörpers ist so bemessen, dass die Zahnkette hierin mit einem geringen Spiel seitlich geführt ist.

Bei diesen Kettenfördem tritt das Problem auf, dass der Verschleiß der Zahnlaschen aufgrund der Gleitreibung zwischen den Zahnlaschen und dem Führungskörper insbesondere der Verschleiß der Zähne sehr stark ist. Es wurden schon einige Versuche unternommen, Verschleißbereiche zu optimieren, so dass längere Standszeiten erreicht werden.

So wurde beispielsweise versucht, die über die Außenlaschen der Zahnkette hinausragende Bolzenanordnung durch eine korrespondierende Aussparung seitens des Flankenbereichs des Führungskörpers aufzunehmen, so dass der Flankenbereich direkt mit der Außenlasche der Zahnkette zusammenwirken kann.

Auch wurden schon Versuche unternommen den Höhenverschleiß der Zahnlasche, genauer der Zähne der Zahnlasche zu reduzieren. So wurden die Zahnlaschen kürzer ausgebildet, wodurch die Aufstandsfläche erhöht und damit die Flächenpressung zwischen Aufstandsfläche und Gleitfläche verringert wurde. Dieses führte zwangsläufig zu einer Erhöhung der Bauteile und zu einer Veränderung der Verzahnungsgeometrien sowie der Teilung.

Es ist daher die Aufgabe der vorliegenden Erfindung, eine Zahnlasche, einer Transportzahnkette und eines Transportförderers der vorstehend beschriebenen Art derart weiter zu verbessern, dass deren Verschleißneigung beim Gleiten über einen Führungskörper reduziert wird, die Anzahl der Bauteile zumindest konstant bleibt und Änderungen an Antriebs- und/oder Umlenkrollen minimal sind.

Diese Aufgabe wird ausgehend von einer Zahnlasche gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Zahnlasche zusätzliche Mittel zur Reduzierung des Höhenverschleißes der Zahnlasche durch eine Vergrößerung der Gesamtaufstandsfläche der Zahnlasche aufweist, wobei diese höhenverschleißmindernden Mittel den Zahneingriff des Zahnrades mit der Zahnlasche nicht beeinflussen. Diese höhenverschleißmindernden Mittel, welche die Aufstandsfläche der Zahnlasche vergrößern, sind als ein dritter Gleitzahn ausgebildet, der mittig zwischen den äußeren Eingriffszähnen der Zahnlasche angeordnet ist. Auf diese Weise lässt sich in einfacher Weise die Aufstandsfläche der Zahnlasche deutlich erhöhen. Der Gleitzahn greift während des Eingriffs der äußeren Eingriffszähne aufgrund seiner Anordnung dabei nicht in die Zahnräder ein, das heißt er kontaktiert die Zahnräder nicht. Diese Lösung bietet den Vorteil, dass die bestehenden Geometrien insbesondere der Antriebs- und/oder Umlenkrollen nicht verändert werden müssen, die Anzahl der Zahnlaschen nicht erhöht wird und der Höhenverschleiß der Zähne erheblich reduziert wird.

Eine die Erfindung verbessernde Maßnahme sieht vor, dass der dritte, mittlere Gleitzahn der Zahnlasche die im Wesentlichen gleiche Aufstandsfläche wie die beiden äußeren Eingriffszähne aufweist. Somit lässt sich auf einfache Weise die Aufstandsfläche um etwa 50% erhöhen, wodurch der Verschleiß um etwa 33% reduziert wird.

Eine weitere die Erfindung verbessernde Maßnahme sieht vor, dass der dritte, mittlere Gleitzahn mit den beiden Eingriffszähnen einteilig als Blechstanzteil ausgebildet ist. Durch die einteilige Ausgestaltung des Gleitzahns lässt sich mittels eines einfachen Stanzens eine erfindungsgemäße Zahnlasche in Massenfertigung produzieren wobei die Anzahl der Bauteile nicht erhöht wird.

Eine weiterführende Verbesserung ist es, dass die Zahngeometrie des Gleitzahns im Wesentlichen trapezförmig ausgebildet ist, so dass der Gleitzahn während des Eingriffs das Zahnrad nicht kontaktiert. Auf diese Weise lässt sich ein stabiler Gleitzahn mit einer großen Aufstandsfläche bilden, der in den Freiraum der Verzahnung eines antreibenden oder umlenkenden Zahnrades passt, ohne die Zähne des Zahnrades zu kontaktieren.

Vorzugsweise entspricht die Zahngeometrie der Eingriffszähne einer genormten Verzahnungsgeometrie umfassend die Geometrien einer Evolvente, einer Geradeverzahnung, einer Zykloidenverzahnung oder einer Triebstockverzahnung.

Eine erfindungsgemäße Transportzahnkette besteht aus mit zu einer Endloskette verbundenen erfindungsgemäßen Zahnlaschen. Dementsprechend umfasst ein Kettenförderer die erfindungsgemäße Transportzahnkette, welche endlos über eine mit der Verzahnung der Zahnkette zusammenwirkende Antriebsradanordnung geführt ist, und über einem Führungskörper als Transportstrecke geführt ist.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine Seitenansicht einer erfindungsgemäßen Zahnlasche,
- Fig. 2: eine Zahnlasche gemäß dem Stand der Technik,
- Fig. 3: einen Ausschnitt einer erfindungsgemäßen Transportzahnkette im Eingriff mit einem Zahnrad,
- Fig. 4: einen Ausschnitt einer erfindungsgemäßen Transportzahnkette gleitend auf einem Führungskörper, und
- Fig. 5: eine Draufsicht auf einen Ausschnitt der Transportzahnkette gemäß Fig. 4.

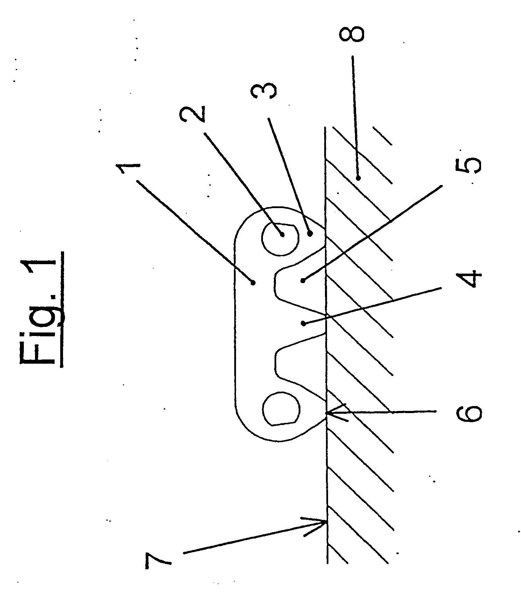

Die Zahnlasche 1 nach Fig. 1 umfasst zwei Ausbrüche 2 und zwei endseitige Eingriffszähne 3 sowie zusätzliche verschleißmindernde Mittel in Form eines mittleren Gleitzahns 4. Die beiden Eingriffszähne 3 begrenzen jeweils die Zahnlasche 1 in Längsrichtung. In den Eingriffszähnen 3 sind die Ausbrüche 2 angeordnet. In die Ausbrüche 2 werden beim Verbinden mehrerer Zahnlaschen zu einer Transportzahnkette jeweils - hier nicht weiter dargestellte - Steckverbindungen angeordnet. Der dritte Gleitzahn 4 ist mittig zwischen den beiden Eingriffszähnen 3 angeordnet ist. Zwischen dem mittleren Gleitzahn 4 und den beiden die Zahnlasche 1 begrenzenden Eingriffszähnen 3 ist je ein Freiraum 5 ausgebildet, in dem die Zähne eines, eine entsprechende Zahngeometrie aufweisenden - hier nicht gezeigten - Zahnrades eingreifen können. Die Zahnlasche 1 mit dem dritten Gleitzahn ist einteilig ausgebildet, dass heißt die Zahnlasche 1 weist eine dreizahnige Außenkontur auf. Die Zahngeometrie des dritten, mittleren Gleitzahns (4) ist im Wesentlichen trapezförmig ausgebildet. Alle drei Zähne weisen an ihrem distalen Ende eine Aufstandsfläche 6 auf, welche über eine Gleitfläche 7 eines Führungskörpers 8 gleitet. Dabei sind die Aufstandsflächen 6 aller Zähne gleich groß.

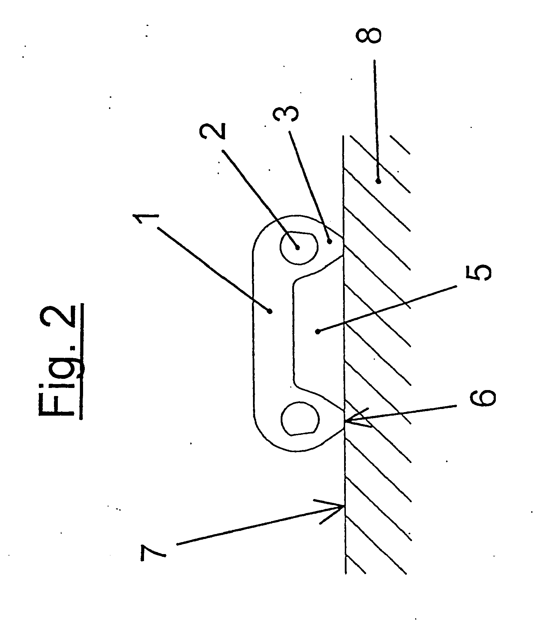

In Fig. 2 ist zum Vergleich eine dem Stand der Technik entsprechende Zahnlasche 1 dargestellt. Diese weist zwei die Zahnlasche 1 in Längsrichtung begrenzende Eingriffszähne 3 mit je einem Durchbruch auf. Die beiden Eingriffszähne 3 gleiten mit ihrer Aufstandsfläche 6 über die Gleitfläche 7 des Führungskörpers 8. Zwischen den beiden Eingriffszähnen 3 befindet sich ein großer Freiraum 5, welcher eine Beeinflussung bei Eingriff eines - hier nicht gezeigten - Zahnrades in eine aus mehreren Zahnlaschen 1 bestehenden Transportzahnkette vermeiden soll.

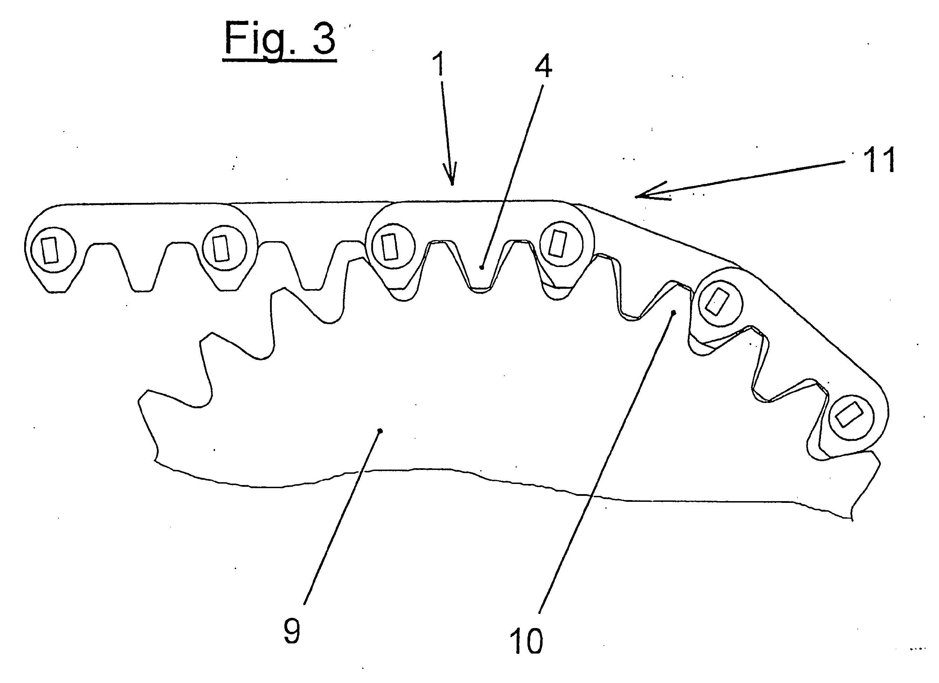

In Fig. 3 sind mehrere erfindungsgemäße Zahnlaschen 1 zu einer endlos Transportzahnkette verbunden. Es ist der Eingriff der Zähne 10 eines Zahnrades 9 in die Freiräume der Zahnlaschen 1 ersichtlich. Dabei kontaktiert der dritte, mittlere Gleitzahn der Zahnlasche 1 das Zahnrad 9 beziehungsweise dessen Zähne 10 nicht.

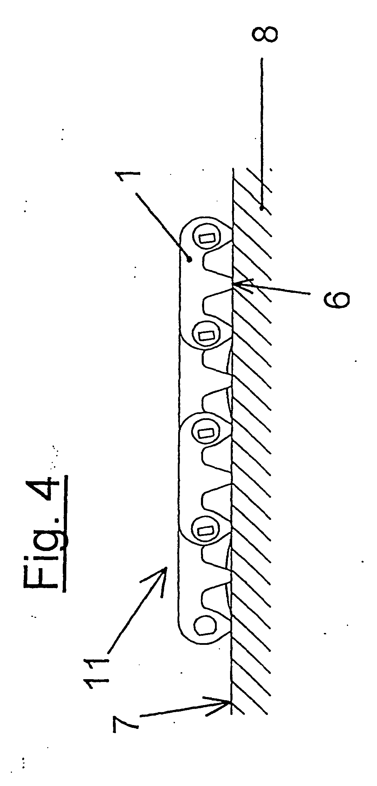

In Fig. 4 ist ein Ausschnitt einer erfindungsgemäßen Transportzahnkette 11 mit vier erfindungsgemäßen Zahnlaschen auf einem Führungskörper 8 dargestellt. Die einzelnen Zahnlaschen 1 kontaktieren die Gleitfläche 7 des Führungskörpers 8 mit der Aufstandsfläche 6.

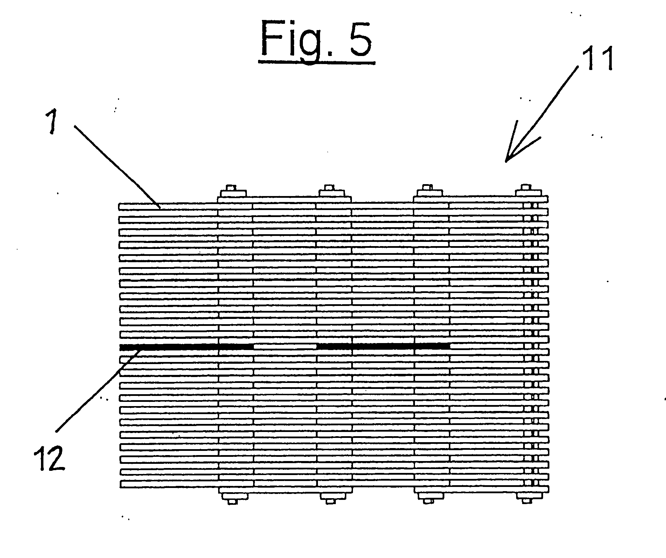

Fig. 5 zeigt eine Draufsicht auf einen Ausschnitt einer erfindungsgemäßen Transportzahnkette 11. Bei der erfindungsgemäßen Transportzahnkette 11 sind die einzelnen Zahnlaschen 1 sowohl hintereinander als auch nebeneinander miteinander über die vorstehend erwähnte Steckverbindung verbunden. Durch Variation der Anzahl der nebeneinander angeordneten Zahnlaschen 1 erhält man verschieden breite Auflageflächen zum Transport von Gütern. Dunkel markiert sind beispielhaft zwei Führungslaschen 12, die unmittelbar hintereinander angeordnet sind. Die an sich bekannten Führungslaschen 12 laufen in die - hier nicht ersichtlichen - Führungsnuten der Zahnräder und führen die Zahnkette in Förderrichtung.

### Bezugszeichenliste

- **1**: Zahnlasche
- **2**: Ausbruch
- **3**: Eingriffszahn
- **4**: Gleitzahn
- **5**: Freiraum
- **6**: Aufstandsfläche
- **7**: Gleitfläche
- **8**: Führungskörper
- **9**: Zahnrad
- **10**: Zahn
- **11**: Transportzahnkette
- **12**: Führungslasche

## Patentansprüche

1. Zahnlasche (1) für eine Transportzahnkette (11) mit Ausbrüchen (2) und zwei endseitigen Eingriffszähnen (3) zum formschlüssigen Eingreifen in ein Zahnrad (9), die an die Verzahnung des Zahnrads (9) geometrisch angepasst sind, und die außerdem je eine untere Aufstandsfläche (6) zum Gleiten auf einer Gleitfläche (7) eines Führungskörpers (8) aufweisen,
**dadurch gekennzeichnet, dass** als zusätzliches Mittel zur Reduzierung des Höhenverschleißes der Zahnlasche (1) ein dritter, nicht für den Zahneingriff mit dem Zahnrad (9) ausgebildet Gleitzahn (4) vorgesehen ist, der mittig zwischen den äußeren Eingriffszähnen (3) der Zahnlasche (1) angeordnet ist, um die Gesamtaufstandsfläche der Zahnlasche (1) auf der Gleitfläche (7) zu vergrößern.

2. Zahnlasche nach Anspruch 1,
**dadurch gekennzeichnet, dass** der dritte, mittlere Gleitzahn (4) der Zahnlasche (1) die im Wesentlichen gleiche Aufstandsfläche (6) wie die beiden äußeren Eingriffszähne (3) aufweist.

3. Zahnlasche nach Anspruch 1,
**dadurch gekennzeichnet, dass** der dritte, mittlere Gleitzahn (4) mit den beiden Eingriffszähnen (3) einteilig als Blechstanzteil ausgebildet ist.

4. Zahnlasche nach Anspruch 1,
**dadurch gekennzeichnet, dass** die Zahngeometrie des Gleitzahns (4) im Wesentlichen trapezförmig ausgebildet ist, und dass der Gleitzahn (4) während des Eingriffs das Zahnrad (9) nicht kontaktiert.

5. Zahnlasche nach Anspruch 1,
**dadurch gekennzeichnet, dass** die Zahngeometrie der Eingriffszähne (3) einer genormten Verzahnungsgeometrie umfassend die Geometrien einer Evolvente, einer Geradeverzahnung, einer Zykloidenverzahnung oder einer Triebstockverzahnung entspricht.

6. Transportzahnkette (11) mit zu einer Endloskette verbundenen Zahnlaschen (1) gemäß Anspruch 1 bis 5.

7. Kettenförderer, umfassend mindestens eine Transportzahnkette (11) nach Anspruch 6, die endlos über eine mit der Verzahnung der Transportzahnkette (11) zusammenwirkende Antriebsradanordnung geführt ist, und die über einen Führungskörper (8) längs der Transportstrecke geführt ist.

## Claims

1. A link (1) for a toothed transportation chain (11) comprising recesses (2) and two engagement teeth (3) at the ends thereof for positively engaging a gear (9) and geometrically adapted to the toothing of the gear (9) and each also having a contact surface (6) for sliding on a sliding surface (7) of a guiding body (8),
**characterised in that** as an additional means for reducing the wearing-down of the height of the link (1) by abrasion a third, sliding tooth (4) not configured for tooth engagement with the gear (9) is provided and arranged in the middle between the outer engagement teeth (3) of the link (1) in order to increase the overall contact surface of the link (1) on the sliding surface (7).

2. The link according to claim 1,
**characterised in that** the third, middle sliding tooth (4) of the link (1) has essentially the same contact surface (6) as the two outer engagement teeth (3).

3. The link according to claim 1,
**characterised in that** the third, middle sliding tooth (4) is integrally formed together with the two engagement teeth (3) as a blanked metal sheet part.

4. The link according to claim 1,
**characterised in that** the tooth geometry of the sliding tooth (4) is essentially trapezoidal, and **in that** the sliding tooth (4) does not contact the gear (9) during engagement.

5. The link according to claim 1,
**characterised in that** the tooth geometry of the engagement teeth (3) corresponds to a standardized tooth geometry comprising involute, straight, cycloid and lantern tooth geometries.

6. A toothed transportation chain (11), comprising links (1) according to claims 1 to 5 joined in an endless chain.

7. A chain conveyor comprising at least one toothed transportation chain (11) according to claim 6, which endlessly passes over a drive assembly interacting with the toothing of the toothed transportation chain (11) and which also passes over a guiding body (8) along the transportation path.

## Revendications

1. Maille de chaîne dentée (1) pour une chaîne de transport dentée (11) avec des creux (2) et deux dents d'engrènement (3) aux extrémités pour établir un engrènement par coopération de formes dans une roue dentée (9), lesquelles, sont adaptées géométriquement à la denture de la roue dentée (9) et présentent en outre chacune une surface de contact (6) pour glisser sur une surface de glissement (7) d'un corps de guidage (8),
**caractérisée en ce qu'**à titre de moyen additionnel pour réduire l'usure en hauteur de la maille de chaîne dentée (1) est prévue une troisième dent de glissement (4) réalisée pour l'engrènement avec la roue dentée (9), laquelle dent est agencée au milieu entre les dents d'engrènement (3) de la maille de chaîne dentée (1) pour agrandir la surface de contact totale de la maille de chaîne dentée (1) sur la surface de glissement (7).

2. Maille de chaîne dentée selon la revendication 1,
**caractérisée en ce que** la troisième dent de glissement (4) médiane de la maille de chaîne dentée (1) présente sensiblement la même surface de contact (6) que les deux dents d'engrènement extérieures (3).

3. Maille de chaîne dentée selon la revendication 1,
**caractérisée en ce que** la troisième dent de glissement (4) médiane est réalisée avec les deux dents d'engrènement (3) d'une seule pièce sous forme de pièce de tôle découpée à la presse.

4. Maille de chaîne dentée selon la revendication 1,
**caractérisée en ce que** la géométrie de la dent de glissement (4) est réalisée sensiblement en forme de trapèze, et **en ce que** la dent de glissement (4) ne vient pas en contact avec la roue dentée (9) pendant l'engrènement:

5. Maille de chaîne dentée selon la revendication 1,
**caractérisée en ce que** la géométrie de la dent d'engrènement (3) correspond à une géométrie de denture normalisée comprenant les géométries d'une développante, d'une denture droite, d'une denture cycloïdale ou d'une denture en fuseau.

6. Chaîne de transport dentée (11) comportant des mailles de chaîne dentées (1) selon les revendications 1 à 5, reliées pour former une chaîne sans fin.

7. Transporteur à chaînes, comprenant au moins une chaîne de transport dentée (11) selon la revendication 6, qui est guidée sans fin via un agencement de roue d'entraînement coopérant avec la denture d'une chaîne de transport dentée (11) et qui est guidée via un corps de guidage (8) le long du trajet de transport.
